# EUROPEAN PATENT APPLICATION

(11) **EP 0 858 838 A1**
(43) Date of publication of application: **19.08.1998**
(21) Application number: 98300909.3
(22) Date of filing: 09.02.1998
(51) Int. Cl.: B01J 39/08, D21F 1/00, C08G 73/22, C08G 75/32

(54) **Phase separation media, e.g. papermachine clothing or filters**

(30) Priority: 10.02.1997 US 797321
(71) Applicant: SCAPA GROUP PLC, Blackburn, Lancashire BB2 6AY (GB)
(72) Inventor: Patel, Sanjay, Summerville, SC 29485 (US)
(74) Representative: Middlemist, Ian Alastair

(57) **Abstract**

Papermachine clothing comprises yarns and/or fibres comprising at least one of polybenzoxazole (PBO) or polybenzothiazole (PBT) polymer or random, block or copolymers of PBO and/or PBT.

## Description

The present invention relates to phase separation media and conveyor belts, e.g. papermachine clothing and filtration media particularly, but not exclusively, to water permeable dryer fabrics, press drying fabrics, condebelt dryers and impingement drying fabrics.

Dryer fabrics are used in the dryer section of a papermachine to support a moist paper web during the manufacture of paper. In the dryer section the paper web supported by the dryer fabric belt is heated by a number of heated cylinders so as to dry the paper.

In recent years papermachine builders have been designing new dryer sections capable of operating at ever increasing temperatures. For instance a standard dryer section operates at temperatures in the order of 120°C, but the latest machines are capable of working at temperatures approaching 500°C. However, these new dryer sections may not be operated at their highest potential temperatures as they are restricted by the temperature resistance of the material used for making the dryer fabrics. Thus at present the maximum working temperature of papermachine dryer sections, including impulse drying (press drying) sections is 180°C. To date no organic polymer yarn or fibre material, that is not prohibitively expensive, has been suggested as a suitable material for use in the dryer section of a papermachine. Inorganic (mineral) materials are generally too brittle to be suitable for use in papermachine clothing. They further present health and safety risks (eg asbestos) or they may be affected by hydrolysis.

Thus metal yarns and fibres have been adopted for making the dryer fabrics in the latest dryer sections. However, these metal dryer fabrics have a tendency to corrode in the hot, humid and oxidising conditions of a modern papermachine. The use of metal also results in an extremely heavy fabric which is difficult to handle and install on a papermachine .The use of organic materials has not been suggested for use, e.g. in the dryer section of a papermachine operating at temperatures above 25°C.

The present invention seeks to provide papermachine clothing, particularly but not exclusively, for use in the dryer section of a papermachine which is light, flexible and is stable to high temperatures and hydrolysis.

According to the present invention there is provided a phase separation medium or the like comprising a fabric, at least some of the constituents of which comprise at least one of polybenzoxazole (PBO) or polybenzothiazole (PBT) polymer or random, block or copolymers of PBO and/or PBT. The constituents of the fabric may comprise yams or fibres or both, the fabric being either woven or nonwoven. The web may comprise further fabrics or layers, and is preferably water permeable.

Fibres and yarns made from polybenzoxazole or polybenzothiazole offer a combination of excellent high temperature resistance (up to 650°C), superb hydrolysis resistance, low water retention (maximum 0.8%), light weight and high abrasion resistance. Thus such fibres and yarns are ideal for use in the dryer section of a modern papermachine including press dryer sections and impingement dryer sections.

The PBO or PBT polymers or random, block or copolymers of the invention preferably comprise any one, or two, or all of the following units:- 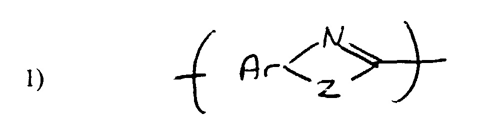 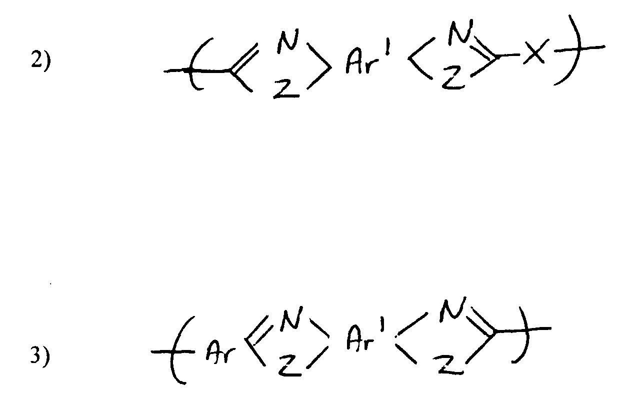 wherein:-
Ar and Ar¹ represent a group which is preferably a fused or unfused aromatic or cycloaliphatic carbocyclic group containing 6-18C atoms, particularly phenylene, tolylene, biphenylene or bis-phenylene ether, and most preferably a 1,3,4-phenylene group for Ar and a 1,2,4,5-phenylene group for Ar¹. Z is an O or S atom. X is an aliphatic group containing up to 12C atoms, preferably a 2-6C straight chain alkyl group, but more preferably it is a divalent aromatic group as described by Ar. Note that these aromatic groups may be heterocyclic, eg. a pyridinylene group. It is preferred that the N and Z atoms are part of a five-membered ring fused with the aromatic group Ar or Ar¹.

The yarns or fibres may be made by the process described in PCT Patent Application WO 93/20400.

The yarns and fibres would have the same dimensions (eg. titre) as those normally used in papermachine clothing fabrics or felts. They can be in the form of monofilament, multifilament or wrapped, braided, twisted, plied or cabled yarns, or as batt staple fibre. The yams and fibres may be used in papermachine clothing, filter fabrics and belts and other phase separation media, and also on conveyor belts, e.g. high temperature conveyor belts.

## Claims

1. A phase separation medium or the like comprising a fabric, at least some of the constituents of which comprise at least one of polybenzoxazole (PBO) and polybenzothiazole (PBT) polymer or random, block or copolymers of PBO and/or PBT.

2. A medium as claimed in claim 1, wherein the said PBO or PBT polymers or random, block or copolymers comprise any one, or two, or all of the following units:- 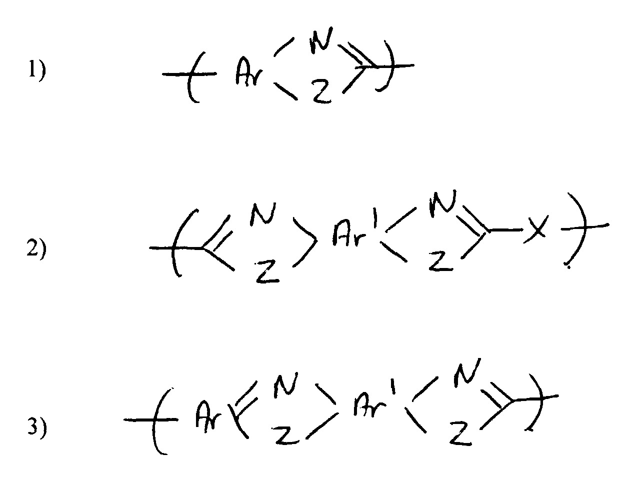 wherein:-
Ar, Ar¹ and X represent an aromatic or aliphatic or cycloaliphatic group, containing up to 12 carbon atoms and Z is an O or S atom.

3. A medium as claimed in claim 2, wherein Ar, Ar¹ and X represent a fused or unfused aromatic or aliphatic carbocyclic group containing 6-18C atoms.

4. A medium as claimed in claim 2, wherein Ar represents phenylene, tolylene, biphenylene or bisphenylene ether.

5. A medium as claimed in claim 2, wherein Ar¹ represents phenylene, tolylene, biphenylene or bis-phenylene ether.

6. A medium as claimed in claim 2, wherein Ar represents 1,3,4-phenylene and Ar¹ represents 1,2,4,5-phenylene.

7. A medium as claimed in claim 2, wherein X comprises a 2-6C straight chain alkyl group.

8. A medium as claimed in claim 2, wherein X is a fused or unfused carbocyclic group containing 6-18C atoms.

9. A medium as claimed in claim 2, wherein X represents phenylene, tolylene, biphenylene or bis-phenylene ether.

10. A medium as claimed in claim 2, wherein X represents 1,3,4-phenylene group.

11. A medium as claimed in claim 2, wherein N and Z atoms are part of a five-membered ring fused with the aromatic group Ar or Ar¹.

12. A phase separation medium according to any preceding claim comprising a papermaking fabric.

13. A phase separation medium according to any of claims 1 to 11 comprising a filter cloth or filter medium.
